# EUROPÄISCHE PATENTSCHRIFT

(11) **EP 2 493 054 B1**
(45) Veröffentlichungstag und Bekanntmachung des Hinweises auf die Patenterteilung: **25.06.2014**
(21) Anmeldenummer: 11155955.5
(22) Anmeldetag: 25.02.2011
(51) Int. Cl.: H02K 9/20, H02K 21/14

(54) **Mehrphasige Transversalflussmaschine mit geschrägten Rückschlusssegmenten**
Multi-phase transversal flow machine with inclined back iron segments
Machine d'écoulement transversal multiphasique dotée de segments de bague de culasse inclinés

(43) Veröffentlichungstag der Anmeldung: 29.08.2012
(73) Patentinhaber: Siemens Aktiengesellschaft, 80333 München (DE)
(72) Erfinder: Hamann, Jens, 90765 Fürth (DE); Klöpzig, Markus, 91320 Ebermannstadt (DE); Köpken, Hans-Georg, 91056 Erlangen (DE); Stoiber, Dietmar, 90763 Fürth (DE)

(56) Entgegenhaltungen:
- EP-A1- 1 005 136
- EP-A2- 1 063 754
- DE-A1- 19 811 073

## Beschreibung

Die vorliegende Erfindung betrifft eine mehrphasige Transversalflussmaschine mit einem ersten Aktivteil, das entlang einer Bewegungsbahn abwechselnd mit Magneten und Flusssammlern besetzt ist, und einem zweiten Aktivteil, das zur Bewegung des ersten Aktivteils mit diesem in magnetischer Wechselwirkung steht, und durch welches hindurch das erste Aktivteil entlang der Bewegungsbahn bewegbar ist. Die Transversalflussmaschine kann als Torque-Motor oder als Linearmotor bzw. entsprechender Generator ausgebildet sein.

Heutige Torque-Motoren besitzen typischerweise eine Leistungsdichte von 1 kW/kg. In sämtlichen technischen Zweigen, in denen derartige Motoren eingesetzt werden, ist man jedoch unter anderem auch bemüht, diese Leistungsdichte zu verbessern. Dies wäre insbesondere in der Automobilindustrie, besonders aber auch in der Flugzeugindustrie von Vorteil. Speziell in der Flugzeugindustrie werden Antriebssysteme mit einer Leistungsdichte von 8 kW/kg benötigt.

Heute werden in der Regel nur für Modellflugzeuge elektrische Antriebssysteme eingesetzt. Von der Firma Geiger Engineering ist beispielsweise ein hochpoliger Motor als Flugzeugelektromotor ohne Getriebe bekannt. Er besitzt eine Magnetpolzahl von 42 und eine Leistung von 20 kW bei einer Grenzdrehzahl von 2500 rpm. Für die Startphase hat dieser Motor ein Leistungsgewicht von 3,6 kW/kg.

Transversalflussmotoren zeichnen sich durch eine Ringwicklung aus, und der magnetische Fluss verläuft transversal (senkrecht) zur Drehebene. Bei dreiphasigen Transversalflussmotoren hat jede Phase üblicherweise eine eigene permanente Erregung. Es sind aber auch Transversalflussmotoren bekannt (siehe unten) bei denen die drei Phasen von nur einem Permanentmagnetsystem gespeist werden. Transversalflussmotoren besitzen die Möglichkeit, hohe Polpaarzahlen zu verwirklichen und weisen damit kleine Polteilungen auf. Damit wird das Eisengewicht pro Pol klein und folglich ergibt sich ein günstiges Leistungsgewicht. Aufgrund der Ringwicklung entfallen die Wickelköpfe.

Ein gattungsgemäßer mehrphasiger Transversalflussmotor ist in der Druckschrift DE 198 11 073 C2 beschrieben. Speziell ist dort ein mehrphasiger Transversalflussaktor mit einem Primärteil und einem Sekundärteil beschrieben, wobei das Primärteil mehrere in der Längsrichtung des Transversalflussaktors voneinander beabstandete Blechpakete aufweist. Jedes Blechpaket weist außerdem einen ringförmigen Außenbereich auf, von dem aus Pole, die gleichmäßig über den Umfang des Außenbereichs verteilt sind, nach Innen ragen. Die Pole der Blechpakete sind in der Längsrichtung zueinander in Reihe ausgerichtet. Die Reihen von zueinander ausgerichteten Polen werden jeweils durch wenigstens eine Erregerwicklung so erregt, dass die Pole in der Umfangsrichtung zeitlich nacheinander ein Flussmaximum erreichen. Das Sekundärteil weist in der Längsrichtung verlaufende und in der Umfangsrichtung nebeneinander angeordnete Reihen auf, in denen Permanentmagnetelemente und Sammlerpakete abwechseln. Jeweils eine Reihe greift in den Raum zwischen zwei benachbarten Polen, wobei die Sammlerpakete mit abwechselnder Polarität aufeinander folgen. Die Permanentmagnetelemente und die Sammlerpakete jeder Reihe sind schräg zur Längsrichtung derart angeordnet, dass der magnetische Fluss ausgehend von einem Pol eines Blechpakets in ein Sammlerpaket einer Reihe seitlich eintritt, von diesem über ein benachbartes Permanentmagnetelement der Reihe in das nachfolgende Sammlerpaket der Reihe und von diesem zum in der Umfangsrichtung gegenüberliegenden Pol des Blechpakets verläuft, um über die Pole und den Außenbereich geschlossen zu werden. Die Sammlerpakete und die Permanentmagnetelemente benachbarter Reihen sind in der Längsrichtung gegeneinander versetzt, sodass bei der Erregung der Polreihen eine Relativbewegung zwischen dem Primärteil und dem Sekundärteil entsteht.

Aus der EP 1 063 754 A2 ist eine Transversalflussmaschine bekannt, die über den Umfang angeordnete Permanentmagnete und zwischen den Permanentmagneten angeordnete Flussleitstücke umfasst. Der Stator umfasst über den Umfang angeordnete Polelemente zur Aufnahme von Wicklungen. Zur Reduzierung der magnetischen Verluste ist es vorgesehen, dass zumindest ein Teil der Polelemente aus einem magnetisch isotropen Material hergestellt ist. Dabei können die Polelemente aus Blechpakten gebildet sein, die gegeneinander um eine Polteilung oder ungeradzahlige Vielfache der Polteilung verdreht sind.

Die EP 1 005 136 A1 beschreibt eine ein- oder mehrphasige Transversalflussmaschine mit am Rotor in Umfangsrichtung angeordneten Permanentmagneten und zwischen den Permanentmagneten angeordneten Flüssleitstücken und mit am Stator in Umfangsrichtung aufeinanderfolgend angeordneten U-Jochen. Dabei sind die U-Joche und/oder die Permanentmagnete oder die Flussleitstücke gegenüber einer zur Drehachse der Maschine parallelen Richtung versetzt orientiert.

Die Aufgabe der vorliegenden Erfindung besteht darin, mehrphasige Transversalflussmaschinen konstruktiv einfacher herstellen zu können.

Erfindungsgemäß wird diese Aufgabe gelöst durch eine mehrphasige Transversalflussmaschine mit
- einem ersten Aktivteil, das entlang einer Bewegungsbahn abwechselnd mit Magneten und Flusssammlern besetzt ist, und
- einem zweiten Aktivteil, das zur Bewegung des ersten Aktivteils mit diesem in magnetischer Wechselwirkung steht, und durch welches hindurch das erste Aktivteil entlang der Bewegungsbahn bewegbar ist, wobei
- die Flusssammler in dem ersten Aktivteil mit ihrer Haupterstreckungsrichtung senkrecht zu der Bewegungsbahn angeordnet sind,
- jedes der Rückschlusssegmente relativ zu der Bewegungsbahn um eine Polteilung geschrägt ist und wobei
- das zweite Aktivteil für jede Phase jeweils mindestens eine sich parallel zu der Bewegungsbahn erstreckende Kette von Rückschlusssegmenten aufweist, wodurch
- die Rückschlusssegmente einander zugewandt sind, so dass zwischen den Rückschlusssegmenten ein Hohlraum entsteht, in dem das erste Aktivteil entlang der Bewegungsbahn bewegbar ist.

Die Flusssammler in dem ersten Aktivteil (z.B. Läufer) sind mit ihrer Symmetrie- oder Haupterstreckungsebene senkrecht zu der Bewegungsbahn angeordnet und somit als gerade Prismen ausgebildet. Es kann sich bei den Flusssammlern also um einfache Blechpakete handeln, deren einzelne, gleich große Bleche senkrecht zur Bewegungsrichtung angeordnet sind. Damit lassen sich insbesondere die ersten Aktivteile speziell von Torque-Motoren konstruktiv sehr einfach herstellen.

Wenn die mehrphasige Transversalflussmaschine als rotatorischer Motor oder Generator ausgebildet ist, sind das erste Aktivteil, das zweite Aktivteil und die Bewegungsbahn jeweils ringförmig ausgebildet. Das erste Aktivteil entspricht dann beispielsweise dem Läufer und das zweite Aktivteil dem Ständer. Der Ständer besitzt hierbei eine hohlringförmige Ges-und der ringförmige Läufer bewegt sich in seinem Inneren.

Die mehrphasige Transversalflussmaschine kann für einen dreiphasigen Wechselstrom ausgelegt sein. Damit ist er bei üblichem Drehstrom einsetzbar. Hierbei ist es von Vorteil, wenn die Flusssammler des ersten Aktivteils (z.B. Läufer) jeweils eine im Wesentlichen dreieckige Querschnittsfläche senkrecht zu der Bewegungsbahn besitzen. Hierdurch kann eine sehr kompakte Maschinenstruktur realisiert werden.

Alternativ können die Flusssammler des ersten Aktivteils jeweils eine im Wesentlichen sechseckige Querschnittsfläche senkrecht zu der Bewegungsbahn besitzen, wobei das zweite Aktivteil für jede Phase zwei Ketten von Rückschlusssegmenten aufweist, und die zwei Ketten pro Phase sich bezogen auf das erste Aktivteil gegenüberstehen. Durch diese Anordnung kompensieren sich die Kräfte einer Phase senkrecht zur Bewegungsrichtung, sodass ein entsprechend ruhigerer Lauf des Motors gegeben ist.

Die Flusssammler können eine elektrische Breite von 120° besitzen. Damit kann das erste Aktivteil sehr einfach konstruiert werden, wenn der Flusssammler aus zwei gleichbreiten Flusssammlerelementen mit jeweils einer Breite von 60° besteht und daran angrenzende Permanentmagnete ebenfalls eine Breite von 60° besitzen.

Auch die Rückschlusssegmente des zweiten Aktivteils können eine elektrische Breite von 120° besitzen. Dies hat unter Umständen konstruktive oder magnetische Vorteile, wenn die Rückschlusssegmente die gleiche Breite besitzen wie die Flusssammler.

Entsprechend einer Weiterbildung besitzen die Rückschlusssegmente einer ersten der mehreren Phasen und die Rückschlusssegmente einer zweiten der mehreren Phasen an ihren einander zugewandten Enden in Richtung der Bewegungsbahn eine Überlappung entsprechend einer elektrischen Breite von 30° bis 70°. Beispielsweise können Überlappungen von 40° oder 60° vorteilhaft sein. Durch diese verminderte Überlappung lässt sich ein Streufluss zwischen zwei unterschiedlichen Phasen verringern.

Vorzugsweise besitzen die Flusssammler und/oder die Rückschlusssegmente in Richtung der Bewegungsbahn eine ballige Kontur. Dadurch ergibt sich ein eher sinusförmiger Flussverlauf, und die Momentenwelligkeit kann hierdurch reduziert werden.

Des Weiteren können die Rückschlusssegmente jeweils einer der mehreren Phasen an ihren Enden mit Metallstreifen bedeckt sein. Hierdurch lässt sich der Streufluss zwischen den Polen des zweiten Aktivteils verringern.

Ferner kann das erste Aktivteil in seinem Inneren entlang der Bewegungsbahn eine Heat-Pipe oder eine mit Flüssigkeit gefüllte Röhre aufweisen. Damit lässt sich das erste Aktivteil wirkungsvoll kühlen, sodass letztlich eine höhere Leistungsdichte erreicht werden kann.

Darüber hinaus können auch elektrische Leiter in dem zweiten Aktivteil (insbesondere Ständer) als mit Flüssigkeit gefüllte Hohlleiter ausgebildet sein. Auch hierdurch kann die Maschine mit einer höheren Leistung betrieben werden.

Die vorliegende Erfindung wird nun anhand der beigefügten Zeichnungen näher erläutert, in denen zeigen:
- FIG 1: eine perspektivische Ansicht eines drei-phasigen Transversalflussmotors in der Ausführung eines Torque-Motors;
- FIG 2: eine Ansicht auf einen aufgeschnittenen Teil des Transversalflussmotors von FIG 1;
- FIG 3: einen Abschnitt des Transversalflussmotors von FIG 1;
- FIG 4: einen Querschnitt durch einen Transversalflussmotor mit einem Läufer dreieckigen Querschnitts;
- FIG 5: einen Querschnitt durch einen Transversalflussmotor mit einem Läufer quadratischen Querschnitts;
- FIG 6: einen Querschnitt durch einen Transversalflussmotor mit einem Läufer sechseckigen Querschnitts;
- FIG 7: eine Längsschnittansicht durch einen Abschnitt eines Transversalflussmotors und
- FIG 8: eine Draufsicht auf einen Abschnitt des Ständers eines Transversalflussmotors.

Die nachfolgend näher geschilderten Ausführungsbeispiele stellen bevorzugte Ausführungsformen der vorliegenden Erfindung dar.

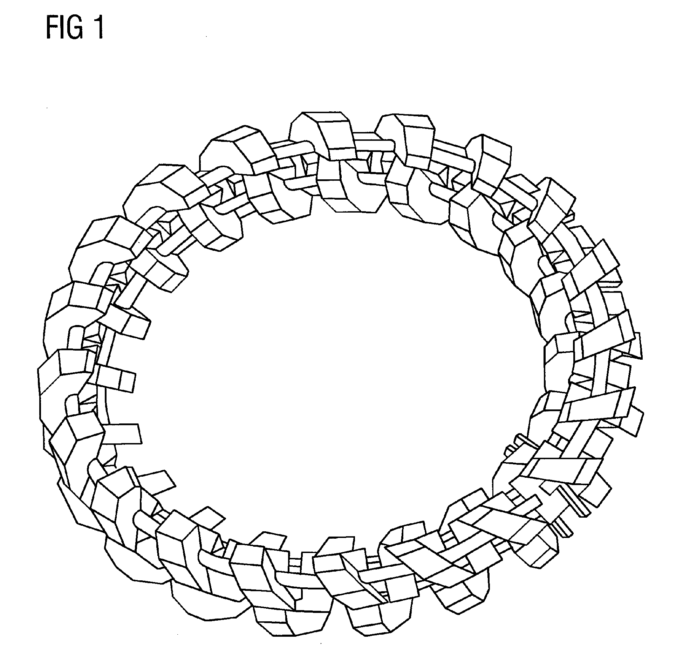

In dem Beispiel von FIG 1 ist ein ringförmiger Torque-Motor dargestellt, der als drei-phasiger Transversalflussmotor mit Permanentmagneten ausgebildet ist. Die Permanentmagnete verbinden alle drei Phasen mit dem Erregerfluss.

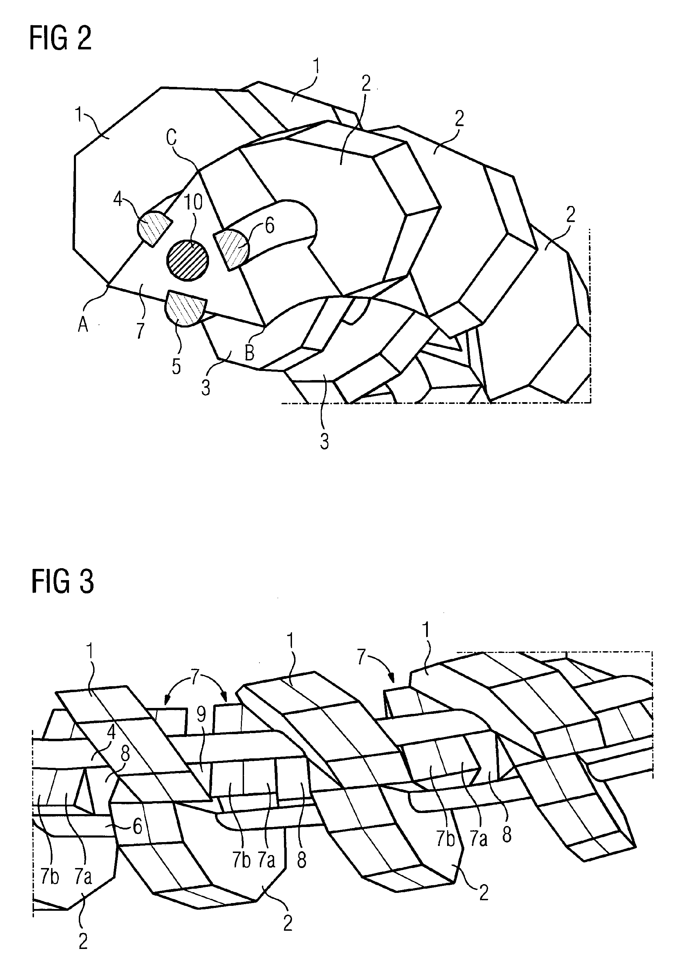

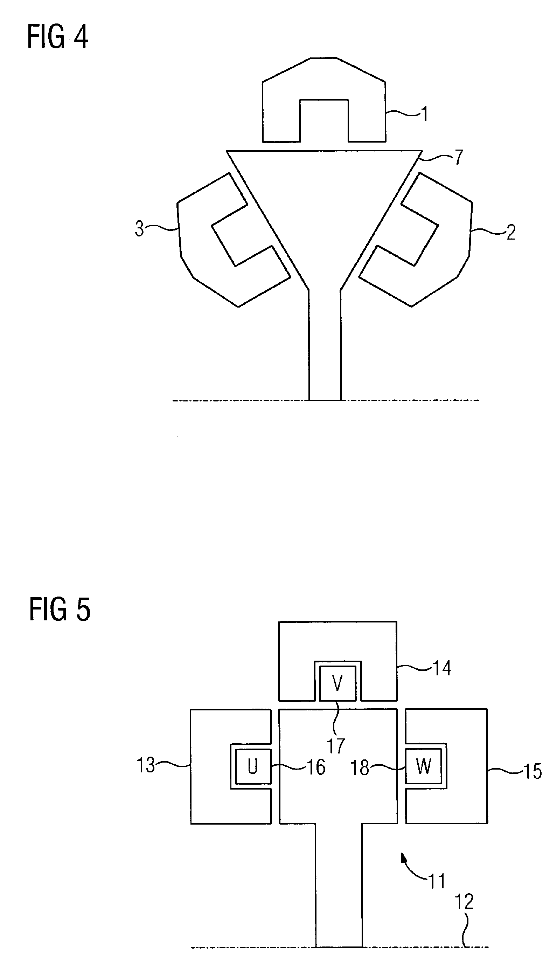

In den FIG 2 und FIG 3 ist die Struktur des drei-phasigen Transversalflussmotors von FIG 1 besser zu erkennen. Hierzu ist in FIG 2 ein Schnitt durch die Ringgestalt des Transversalflussmotors dargestellt. Der Ständer des Transversalflussmotors wird hier im Wesentlichen durch Rückschlusssegmente 1, 2 und 3 sowie durch Ringleitungen 4, 5, 6 gebildet. Jedes der Rückschlusssegmente 1, 2, 3 umgibt den jeweiligen Ringleiter 4, 5, 6 halbkreisförmig. Die flachen Abschnitte der halbkreisförmigen Rückschlusssegmente 1, 2, 3 sind einander zugewandt, sodass zwischen ihnen ein Hohlraum entsteht, der in etwa einen dreieckförmigen Querschnitt (angedeutet in dem Querschnitt von FIG 4) besitzt und sich ringförmig durch den gesamten Ständer (zweiten Aktivteil) erstreckt.

Im Inneren des oben beschriebenen Hohlraums des Ständers bewegt sich der ringförmige Läufer, der sich aus Flusssammlern 7 und Permanentmagneten 8, 9 (vergleiche FIG 3) zusammensetzt. Im Inneren des Läufers befindet sich ein ringförmiger, nicht magnetisch leitender Kern 10 (z.B. aus einem nichtmagnetischen Stahl oder Aluminium), der sich durch den ganzen ringförmigen Läufer erstreckt. Der Läufer kann damit als Kette betrachtet werden, auf dessen Kern 10 die Flusssammler 7 und die Permanentmagnete 8, 9 abwechselnd aufgebracht sind.

Der Kern 10 kann hohl sein, um eine Kühlflüssigkeit zu führen. Er kann aber auch mit einer Heat-Pipe ausgestattet sein, um die Rotorwärme abzuführen.

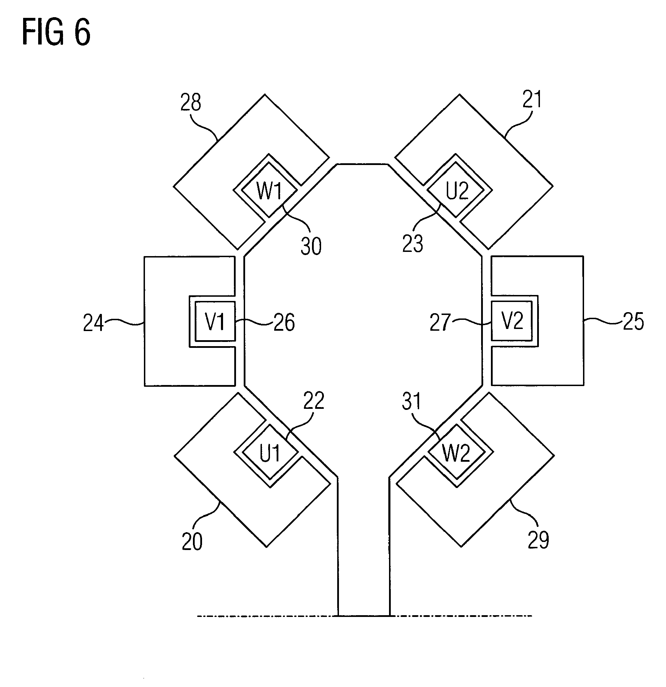

Auf dem Kern 10 sind, wie erwähnt, die magnetischen Flusssammler 7 angeordnet. Sie besitzen hier die Form eines geraden Dreiecksprismas (siehe Draufsicht von FIG 4). Ein Flusssammler besteht in dem gewählten Beispiel aus zwei (gegebenenfalls auch mehr) gleichen Flusssammlerelementen 7a und 7b. Diese beiden Flusssammlerelemente 7a und 7b sind beispielsweise jeweils Blechpakete, die ein gerades Dreiecksprisma (optional auch gerades Vierecks- oder Sechseckprisma, vgl. FIG 5 und 6) bilden. Die Flusssammler können auch aus SMC (Soft Magnetic Composite) ausgeführt werden. Alternativ können sie auch aus einer Kombination aus SMC und Blechen bestehen.

In dem Beispiel der FIG 2 und FIG 3 weisen die dreieckförmigen Flusssammler 7 jeweils eine Breite in Bewegungsrichtung (d. h. der Richtung der Bewegungsbahn des Läufers) auf, die einer elektrischen Breite von 60° entspricht. Eine Periode einer Phase besitzt 360°; die Breite des Läuferabschnitts von einem Nordpol zum nächsten Nordpol entspricht daher 360° elektrisch; die Breite von einem Nordpol zu einem Südpol entspricht 180°. Am Umfang des Läufers (d.h. entlang seiner Bewegungsbahn) folgen auf einen Flusssammler 7 ein Permanentmagnet 8 (Nordpol) mit 60° elektrischer Dicke, dann wieder ein Flusssammler 7 (zwei Flusssammlerelemente 7a, 7b) mit zwei mal 60° elektrischer Breite und dann ein Permanentmagnet 9 (Südpol). Die Dicke beziehungsweise Breite der Flusssammler und Permanentmagnete kann auch anders gewählt werden.

Im Ständer befinden sich die drei Ringleitungen 4, 5, 6, die beispielsweise den drei Phasen U, V und W zugeordnet sind. Die Ringleitungen 4, 5, 6 sind an den drei Seiten des Dreiecks angeordnet, das durch die Rückschlusssegmente 1, 2, 3 gebildet wird. Die Rückschlüsse haben hier eine elektrische Breite von 120°. Damit sind sie ebenso breit wie die Flusssammler 7. Die Rückschlusssegmente 1, 2, 3 können aber auch eine andere Breite besitzen.

Die Rückschlusssegmente sind um eine Polteilung geschrägt und zwischen den drei Phasen um 120° versetzt. Um die Schrägung besser erkennen zu können, werden die Ecken des Dreiecks (hier des Flusssammlers) mit den Bezugszeichen A, B und C gekennzeichnet. Der Rückschluss 1 beispielsweise der Phase U beginnt bei Ecke A (0°) und endet bei Ecke B bei 180°. Der Rückschluss 2 der Phase V beginnt bei Ecke B bei 120° und endet bei Ecke C bei 300°. Der Rückschluss 3 für Phase W beginnt bei Ecke C bei 240° und endet bei Ecke A bei 420° (entsprechend 60°).

In dem gewählten Beispiel haben die Rückschlusssegmente 1, 2, 3 zueinander eine "Überlappung" von 60°. Dies bedeutet hier, dass die Überlappung der halben Breite der Rückschlusssegmente 1, 2, 3 entspricht. Damit ist der Streufluss von den Rückschlüssen einer Phase zu den Rückschlüssen einer anderen Phase geringer als für den Fall, dass die Überlappung der vollen Breite der Rückschlüsse entspricht. Die Größe der Überlappung kann natürlich auch anders gewählt werden.

Wenn die dreieckigen Flusssammler an ihren Spitzen abgeflacht werden, wird die Überkopplung ebenfalls geringer. Außerdem ist in diesem Fall dann eine Befestigung des innen liegenden Läufers an einer Rotationshalterung leichter möglich.

Nachfolgend werden Variationsmöglichkeiten des in FIG 1 dargestellten Transversalflussmotors dargestellt. Diese Variationsmöglichkeiten lassen sich aber auch auf andere, z. B. linear aufgebaute Transversalflussmotoren bzw. -aktoren übertragen.

In dem Beispiel der FIG 1 bis FIG 3 besitzt der Läufer beziehungsweise das Sekundärteil einen dreieckigen Querschnitt. In dem Beispiel von FIG 5 ist angedeutet, dass der Läufer 11, der sich um die Drehachse 12 dreht, in seinem Aktivbereich auch einen rechteckigen beziehungsweise quadratischen Querschnitt besitzen kann. Die auch hier geschrägten Rückschlusssegmente 13, 14 und 15, die den Phasen U, V und W zugeordnet sind, sind an den drei Seiten des Rechtecks beziehungsweise Quadrats angeordnet, die nicht der Achse 12 zugewandt sind. Die Rückschlusssegmente 13, 14 und 15 besitzen hier ähnlich wie in dem vorhergehenden Beispiel eine halbkreisförmige beziehungsweise U-förmige Gestalt in der Seitenansicht von FIG 5. Sie umgeben den jeweiligen Ringleiter 16, 17 und 18.

Alternativ kann das Aktivteil des Läufers auch einen sechseckigen Querschnitt besitzen, wie dies in FIG 6 dargestellt ist. Diese Struktur eignet sich wie diejenige von FIG 4 oder 5 ebenfalls für eine Drei-Phasen-Maschine. Die Rückschlusssegmente einer Phase befinden sich jeweils an gegenüberliegenden Seiten des Sechsecks. So liegen sich beispielsweise die Rückschlusssegmente 20 und 21 der Phase U mit den hintereinander geschalteten Ringleitungen 22 und 23 gegenüber. Ebenso liegen sich die beiden Rückschlusssegmente 24, 25 der Phase V mit den hintereinander geschalteten Ringleitungen 26 und 27 gegenüber. Schließlich liegen sich auch die Rückschlusssegmente 28 und 29 der Phase W mit den hintereinander geschalteten Ringleitungen 30 und 31 gegenüber. Mit dieser Gegenüberstellung der Ständerrückschlüsse werden die pulsierenden Anziehungskräfte jeder Phase separat kompensiert. Durch die Kompensation der Kräfte können dadurch entstehende Geräusche reduziert werden.

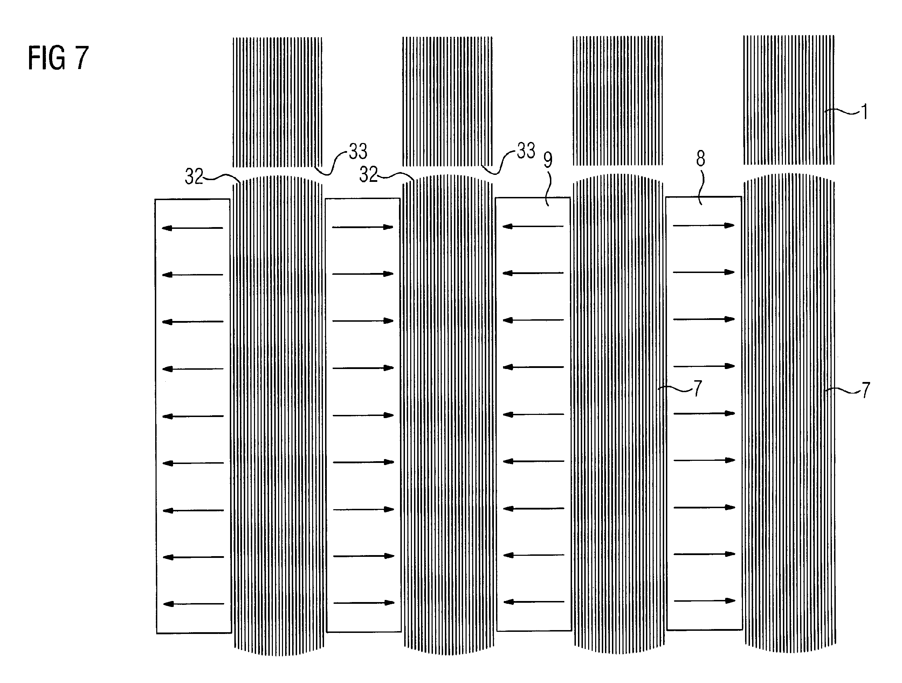

Die Struktur des Transversalflussmotors führt unter Umständen zu einer Momentenwelligkeit. Diese lässt sich durch die Gestaltung der Luftspaltinduktion optimieren. So ist es beispielsweise von Vorteil, gemäß FIG 7 die Polfläche 32 des Läufers oder die Polfläche 33 des Ständers leicht ballig auszubilden, so dass sich ein mehr sinusförmiger Flussverlauf ausbildet. In dem Beispiel von FIG 7 sind die Polflächen der Rückschlusssegmente 1 gerade und die Polflächen 32 der Flusssammler 7 ballig ausgebildet. Durch den sinusförmigen Flussverlauf werden Oberwellen verringert und die mechanischen Anregungen der höheren harmonischen Polkräfte abgemildert. In dem Beispiel von FIG 7 besitzen die Flusssammler 7 nahezu die gleiche Breite wie die entgegengesetzt gerichteten Permanentmagnete 8 und 9.

Motoren, die nach dem Flusssammlerprinzip arbeiten, wie der Transversalflussmotor, bilden unter Strombelastung einen unerwünscht hohen Streufluss zwischen den Ständerpolen der einzelnen Phasen aus. Der Streufluss "verstopft" die magnetischen Wege und führt dadurch zu einer Reduzierung der erreichbaren Kraft beziehungsweise des Drehmoments. Deshalb soll der unerwünschte Streufluss, der sich zwischen den einzelnen Phasen aufbaut, abgeschirmt werden. Es ist aber nach dem Stand der Technik keine magnetische Abschirmung für einen statischen Fluss verfügbar. Es ist aber bekannt, dass Flächen von hoher elektrischer Leitfähigkeit zumindest den zeitlich veränderlichen Fluss abschirmen.

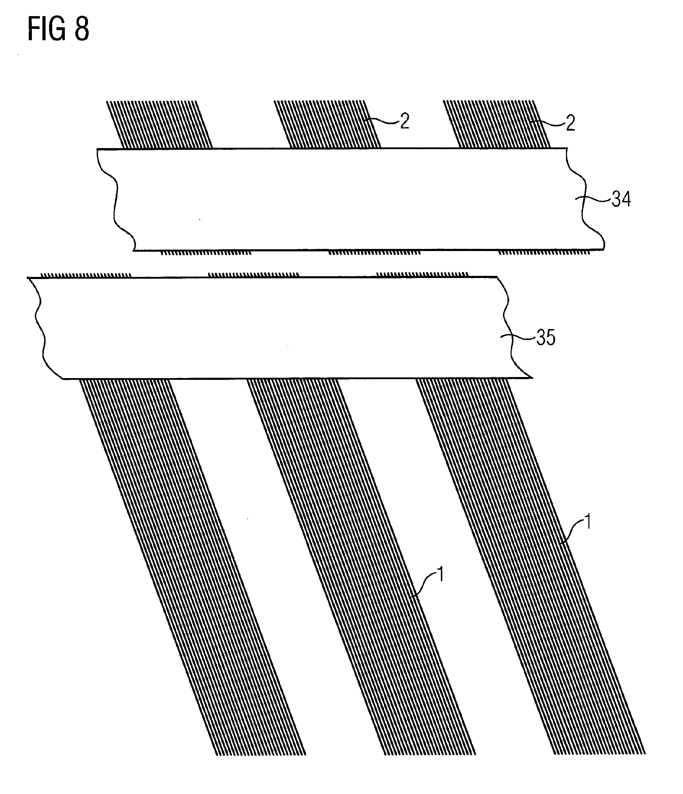

Zur Abschirmung werden daher gemäß FIG 8 an den Enden der Ständerpole beziehungsweise Rückschlusssegmente 1, 2 Abschirmbleche 34, 35 angebracht. Dadurch verringert sich hier der unerwünschte Streufluss zwischen den Phasengruppen U und V bzw. V und W oder W und U.

Die abschirmende Wirkung wird dabei umso besser, je höher die Frequenz des zeitlich veränderlichen Flusses ist. Da die Frequenz des Streuflusses mit der Drehzahl proportional anwächst, lässt sich damit bei höheren Drehzahlen eine Abschirmwirkung erreichen und die Maximalkraft (beziehungsweise das Maximalmoment) im oberen Drehzahlbereich steigern. Da in einer Anwendung für ein Luftfahrzeug der Gegendruck, und damit das erforderliche Drehmoment der Strömungsmaschine, sowieso erst bei hoher Drehzahl einsetzt, ist es akzeptabel, wenn auch die Abschirmwirkung ebenso erst bei hoher Drehzahl einsetzt.

Die ohmsche Wärme, die durch die Abschirmströme entsteht, lässt sich gut abführen, da Materialien von hoher elektrischer Leitfähigkeit auch stets eine hohe Wärmeleitfähigkeit aufweisen. Die Abschirmbleche sind deshalb vorzugsweise thermisch leitend an die Kühlung des Transversalflussmotors anzubinden.

Die Permanentmagnete, die in den obigen Beispielen dargestellt sind, können auch durch Erregerspulen ersetzt werden. Dies kann unter Umständen Preisvorteile bieten.

In einer weiteren Ausführungsform werden die Ringleitungen des Ständers als Hohlleiter ausgebildet, sodass eine Flüssigkeitskühlung (z.B. mit Wasser oder Öl) möglich wird. Damit können Stromdichten von 80 A/mm² bis 100 A/mm² gegenüber heute möglichen maximal 10 A/mm² erreicht werden.

Die Kühlung des Rotors kann, wie oben bereits angedeutet wurde, über den Kern 10 erfolgen, wenn dieser als Hohlring mit Heat-Pipe oder Kühlflüssigkeit ausgestattet wird. Mit dieser Kühlung des Rotors lässt sich dann auch eine Leistungssteigerung erzielen.

Insgesamt wird also ein Transversalflussmotor bereitgestellt, der sich ohnehin schon durch eine hohe Leistungsdichte auszeichnet. Mit dem beispielhaften Aufbau ist eine sehr hohe Ausnutzung möglich, da das Luftspaltinduktionsniveau um 50 % höher angesetzt werden kann und die Stromdichte um den Faktor 10.

Es wird hier also eine Struktur eines Transversalflussmotors bereitgestellt, bei dem die unabhängigen Statorsegmente um eine Polteilung geschrägt und zwischen den drei Phasen um 120° versetzt sind. Bei dieser Maschine sind die Sammler-Magnete ohne Schrägung angeordnet, weshalb der bewegte Teil des Motors (Läufer) eine mechanisch einfachere Struktur aufweist. Durch den gemeinsamen Erregerfluss für alle drei Phasen wird außerdem Permanentmagnetmaterial eingespart und die Masse des Rotors kann so reduziert werden.

Auch wenn die oben dargestellten Ausführungsformen lediglich Motoren zeigen, so ist die Erfindung auch für Generatoren anwendbar.

## Patentansprüche

1. Mehrphasige Transversalflussmaschine mit
- einem ersten Aktivteil, das entlang einer Bewegungsbahn abwechselnd mit Magneten (8, 9) und Flusssammlern (7) besetzt ist,
- einem zweiten Aktivteil, das zur Bewegung des ersten Aktivteils mit diesem in magnetischer Wechselwirkung steht, und durch welches hindurch das erste Aktivteil entlang der Bewegungsbahn bewegbar ist, wobei
- die Flusssammler (7) in dem ersten Aktivteil mit ihrer Haupterstreckungsrichtung senkrecht zu der Bewegungsbahn angeordnet sind, und
- jedes der Rückschlusssegmente (1, 2, 3) relativ zu der Bewegungsbahn um eine Polteilung geschrägt ist,
**dadurch gekennzeichnet, dass**
- das zweite Aktivteil für jede Stromphase (4, 5, 6) jeweils mindestens eine sich parallel zu der Bewegungsbahn erstreckende Kette von Rückschlusssegmenten (1, 2, 3) aufweist und
- die Rückschlusssegmente (1, 2; 3) einander zugewandt sind, so dass zwischen den Rückschlusssegmenten (1, 2, 3) ein Hohlraum entsteht, in dem das erste Aktivteil entlang der Bewegungsbahn bewegbar ist.

2. Mehrphasige Transversalmaschine nach Anspruch 1, die als Torque-Motor ausgebildet ist, wobei das erste Aktivteil, das zweite Aktivteil und die Bewegungsbahn jeweils ringförmig ausgebildet sind.

3. Mehrphasige Transversalflussmaschine nach Anspruch 1 oder 2, die für einen drei-phasigen Wechselstrom ausgelegt ist.

4. Mehrphasige Transversalflussmaschine nach Anspruch 3, wobei die Flusssammler (7) des ersten Aktivteils jeweils eine im Wesentlichen dreieckige Querschnittsfläche senkrecht zu der Bewegungsbahn besitzen.

5. Mehrphasige Transversalflussmaschine nach Anspruch 3, wobei die Flusssammler (7) des ersten Aktivteils jeweils eine im Wesentlichen sechseckige Querschnittsfläche senkrecht zu der Bewegungsbahn besitzen, das zweite Aktivteil für jede Phase zwei Ketten von Rückschlusssegmenten (20, 21, 24, 25, 28, 29) aufweist, und die zwei Ketten pro Phase sich bezogen auf das erste Aktivteil gegenüberstehen.

6. Mehrphasige Transversalflussmaschine nach einem der vorhergehenden Ansprüche, wobei die Flusssammler (7) eine elektrische Breite von 120° besitzen.

7. Mehrphasige Transversalflussmaschine nach einem der vorhergehenden Ansprüche, wobei die Rückschlusssegmente (1, 2, 3) eine elektrische Breite von 120° besitzen.

8. Mehrphasige Transversalflussmaschine nach einem der vorhergehenden Ansprüche, wobei die Rückschlusssegmente (1, 2, 3) einer ersten der mehreren Phasen und die Rückschlusssegmente (1, 2, 3) einer zweiten der mehreren Phasen an ihren einander zugewandten Enden in Richtung der Bewegungsbahn eine Überlappung entsprechend einer elektrischen Breite von 30° bis 70° aufweisen.

9. Mehrphasige Transversalflussmaschine nach einem der vorhergehenden Ansprüche, wobei die Flusssammler (7) und/oder die Rückschlusssegmente (1, 2, 3) in Richtung der Bewegungsbahn eine ballige Kontur aufweisen.

10. Mehrphasige Transversalflussmaschine nach einem der vorhergehenden Ansprüche, wobei die Rückschlusssegmente (7) jeweils einer der mehreren Phasen an ihren Enden mit Metallstreifen (34, 35) bedeckt sind.

11. Mehrphasige Transversalflussmaschine nach einem der vorhergehenden Ansprüche, wobei das erste Aktivteil in seinem Inneren entlang der Bewegungsbahn eine Heat-Pipe oder eine mit Kühlflüssigkeit gefüllte Röhre aufweist.

12. Mehrphasige Transversalflussmaschine nach einem der vorhergehenden Ansprüche, wobei elektrische Leiter in dem zweiten Aktivteil als mit Flüssigkeit gefüllte Hohlleiter ausgebildet sind.

## Claims

1. Multi-phase transverse flux machine with
- a first active part, which is provided with magnets (8, 9) and flux concentrators (7) which alternate along a movement path,
- a second active part, which has a magnetic interaction with the first active part for the purpose of moving the latter, and through which the first active part can move along the movement path, wherein
- the flux concentrators (7) in the first active part are arranged with the direction of their principal extent perpendicular to the movement path, and
- each of the return magnetic path segments (1,2,3) is skewed by one pole pitch relative to the movement path,
**characterised in that**
- the second active part has for each current phase (4, 5, 6) in each case at least one chain of magnetic return path segments (1, 2, 3) which runs along parallel to the movement path, and
- the magnetic return path segments (1, 2, 3) face each other in such a way that a cavity is produced, between the magnetic return path segments (1, 2, 3), in which the first active part is able to move along the movement path.

2. Multi-phase transverse flux machine according to claim 1, which is constructed as a torque motor, wherein the first active part, the second active part and the movement path are each constructed in the form of a ring.

3. Multi-phase transverse flux machine according to claim 1 or 2, which is designed for a three-phase alternating current.

4. Multi-phase transverse flux machine according to claim 3, wherein each of the flux concentrators (7) of the first active part has a cross-section, perpendicular to the movement path, which is essentially triangular.

5. Multi-phase transverse flux machine according to claim 3, wherein each of the flux concentrators (7) of the first active part has a cross-section, perpendicular to the movement path, which is essentially hexagonal, the second active part has for each phase two chains of return magnetic path segments (20, 21, 24, 25, 28, 29), and the two chains for each phase face each other across the first active part.

6. Multi-phase transverse flux machine according to one of the preceding claims, wherein the flux concentrators (7) have an electrical width of 120°.

7. Multi-phase transverse flux machine according to one of the preceding claims, wherein the magnetic return path segments (1,2,3) have an electrical width of 120°.

8. Multi-phase transverse flux machine according to one of the preceding claims, wherein the magnetic return path segments (1, 2, 3) of a first of the several phases and the magnetic return path segments (1, 2, 3) of a second of the several phases have, at their ends which face each other, an overlap in the direction of the movement path which corresponds to an electrical width of 30° to 70°.

9. Multi-phase transverse flux machine according to one of the preceding claims, wherein the flux concentrators (7) and/or the magnetic return path segments (1, 2, 3) have a contour which is convex in the direction of the movement path.

10. Multi-phase transverse flux machine according to one of the preceding claims, wherein the magnetic return path segments (7) of one of the several phases are in each case covered at their ends with metallic strips (34, 35).

11. Multi-phase transverse flux machine according to one of the preceding claims, wherein the first active part has in its interior along the movement path a heat pipe or a tube filled with coolant.

12. Multi-phase transverse flux machine according to one of the preceding claims, wherein electrical conductors in the second active part are constructed as hollow conductors filled with a liquid.

## Revendications

1. Machine polyphasée à flux transversal comprenant
- une première partie active qui est occupée le long d'une voie de déplacement en alternance par des aimants ( 8, 9 ) et par des collecteurs ( 7 ) de flux,
- une deuxième partie active qui, pour le déplacement de la première partie active, est en interaction magnétique avec elle et à travers laquelle la première partie active peut être déplacée le long de la voie de déplacement, dans laquelle
- les collecteurs ( 7 ) de flux sont disposés dans la première partie active en ayant leur direction d'étendue principale perpendiculaire à la voie de déplacement et
- chacun des segments ( 1, 2, 3 ) de retour est incliné d'un pas polaire par rapport à la voie de déplacement,
**caractérisée en ce que**
- la deuxième partie active a, pour chaque phase ( 4, 5, 6 ) du courant respectivement au moins une chaîne, s'étendant parallèlement à la voie de déplacement, de segments ( 1, 2, 3 ) de retour, et
- les segments ( 1, 2, 3 ) de retour sont tournés les uns vers les autres de manière à créer entre les segments ( 1, 2, 3 ) de retour un espace vide dans lequel la première partie active peut être déplacée le long de la voie de déplacement.

2. Machine polyphasée à flux transversal suivant la revendication 1, qui est constituée en couple moteur, la première partie active, la deuxième partie active et la voie de déplacement étant respectivement de forme annulaire.

3. Machine polyphasée à flux transversal suivant la revendication 1 ou 2, qui est conçue pour un courant alternatif triphasé.

4. Machine polyphasée à flux transversal suivant la revendication 3, dans laquelle les collecteurs ( 7 ) de flux de la première partie active possèdent, perpendiculairement à la voie de déplacement, une surface de section transversale sensiblement triangulaire.

5. Machine polyphasée à flux transversal suivant la revendication 3, dans laquelle les collecteurs ( 7 ) de flux de la première partie active ont, perpendiculairement à la voie de déplacement, respectivement une surface de section transversale sensiblement hexagonale, la deuxième partie active a, pour chaque phase, deux chaînes de segment ( 20, 21, 24, 25, 28, 29 ) de retour et les deux chaînes par phase sont opposées, rapportées à la première partie active.

6. Machine polyphasée à flux transversal suivant l'une des revendications précédentes, dans laquelle les collecteurs ( 7 ) de flux ont une largeur électrique de 120°.

7. Machine polyphasée à flux transversal suivant l'une des revendications précédentes, dans laquelle les segments ( 1, 2, 3 ) de retour ont une largeur électrique de 120°.

8. Machine polyphasée à flux transversal suivant l'une des revendications précédentes, dans laquelle les segments ( 1, 2, 3 ) de retour d'une première des plusieurs phases et les segments ( 1, 2, 3 ) de retour d'une deuxième des plusieurs phases ont, sur leurs extrémités tournées l'une vers l'autre dans la direction de la voie de déplacement, un chevauchement correspondant à une largeur électrique de 30° à 70°.

9. Machine polyphasée à flux transversal suivant l'une des revendications précédentes, dans laquelle les collecteurs ( 7 ) de flux et/ou les segments ( 1, 2, 3 ) de retour ont un contour convexe.

10. Machine polyphasée à flux transversal suivant l'une des revendications précédentes, dans laquelle les segments ( 7 ) de retour de respectivement l'une des plusieurs phases sont recouverts à leur extrémité de bandes ( 34, 35 ) métalliques.

11. Machine polyphasée à flux transversal suivant l'une des revendications précédentes, dans laquelle la première partie active a, à l'intérieur le long de la voie de déplacement, un caloduc ou un tube rempli de liquide de refroidissement.

12. Machine polyphasée à flux transversal suivant l'une des revendications précédentes, dans laquelle des conducteurs électriques sont constitués dans la deuxième partie active sous la forme de guides d'ondes remplis de liquide.
